Europäisches Patentamt

**European Patent Office**

**Office européen des brevets**

(11) Publication number: **0 206 259**
**A2**

(12) **EUROPEAN PATENT APPLICATION**

(21) Application number: **86108357.4**

(22) Date of filing: **19.06.86**

(51) Int. Cl.4: **G06F 13/10**

(30) Priority: **27.06.85 US 749217**

(43) Date of publication of application:
**30.12.86 Bulletin 86/52**

(84) Designated Contracting States:
**DE FR GB**

(71) Applicant: **INTERSIL INC.**
**10600 Ridgeview Court**
**Cupertino California 95014(US)**

(72) Inventor: **Wei, James Yuan**
**1655 Pomeroy Avenue, No. 13**
**Santa Clara California 95015(US)**

(74) Representative: **Catherine, Alain**
**General Electric - Deutschland Munich**
**Patent Operations Frauenstrasse 32**
**D-8000 München 5(DE)**

(54) **Reconfigurable input/output system.**

(57) A reconfigurable I/O interface circuit which stores a desired interface configuration using one or more electrically erasable memory circuits, and which permits a user to set one or more configurable interface circuits to either an input state or an output state. In a first configuration, the I/O configuration is initially stored in coded format, and subsequently decoded to control signals. The decoded control signals set the I/O status of each configurable interface circuit. In a second embodiment, a direct representation of the I/O configuration is stored, and each configurable interface circuit directly detects this representation in order to set the status of the configurable interface circuit to an input or output state. In a third embodiment, each configurable interface circuit includes a dedicated electrically erasable memory circuit, which can be independently set to store the status of the interface circuit to an input or output state.

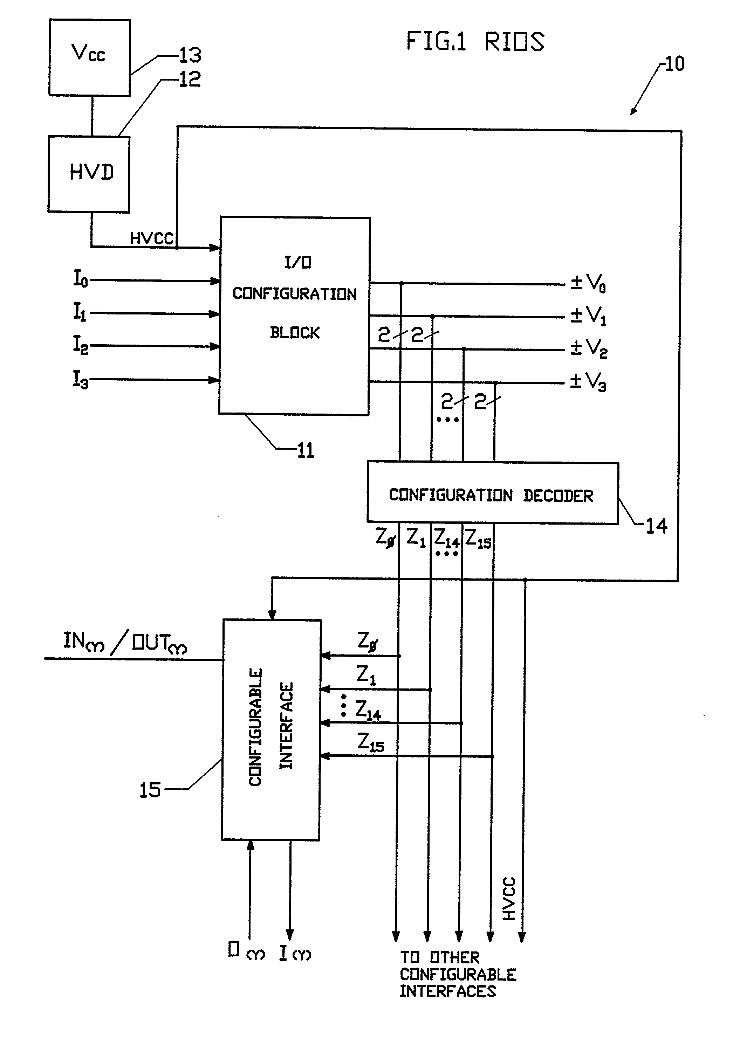

FIG.1 RIOS

## RECONFIGURABLE INPUT/OUTPUT SYSTEM

BACKGROUND OF THE INVENTION

This invention relates to electronic input/output circuitry, and in particular to an electronic circuit in which the input/output configuration may be selectably changed.

In the field of electronics, complex electronic systems often are built up by inerconnecting separate subsystems or subcircuits. Such systems typically have electrical leads (or "pins") that serve as input/output ("I/O") pathways to and from the system. In some instances, two electronic systems may perform the same functions, but have different "pinouts" --that is, different logical configurations of their I/O leads. Thus, a circuit from one manufacturer, while nominally identical in function to a second circuit from another manufacturer, will not serve as a pin-for-pin compatible replacement for the second circuit. Instead, costly rewiring of the larger system in which the first circuit is to be placed must be done in order for the first circuit to function properly as a replacement part.

In some instances where such pin-for-pin incompatibility exists, the only difference in the logical pinouts occurs with respect to the I/O leads. Other leads which may serve as input/output signal paths (for example, for control codes), are in a fixed pattern.

Thus, it would be highly desirable for one manufacturer to fabricate certain circuits with reconfigurable I/O pinouts, so that each circuit may be used in a number of larger systems where the circuit itself is functionally compatible, but the logical layout of the I/O pinouts varies. By supplying a circuit with a configurable I/O system, one manufacturer can effectively supply functionally compatible circuits to purchasers who previously might only buy a competitor's differently configured circuit. In addition, such a manufacturer would substantially reduce the amount of inventory of circuitry required, and would not be required to dedicate separate manufacturing lines to virtually identical circuits that differ only in their logical I/O pinouts.

Therefore, one purpose of this invention is to provide a reconfigurable I/O system that utilizes electrically erasable memory circuit technology to store a user selectable I/O pinout configuration, thereby enabling a single circuit to replace one or more functionally compatible circuits that differ only in I/O pinout configuration. The present invention in its first preferred embodiment is a circuit that permits the reconfiguration of an I/O interface by storing a desired interface configuration code in an I/O configuration block containing one or more electrically erasable memory circuits, and providing decoding circuitry that detects and decodes the stored configuration code and activates one of several signals based on the configuration code. These control signals are further detected by one or more configurable interface circuits, each of which is selectably set to an input state or an output state depending on the value of the detected control signals.

In a first alternative embodiment, a direct representation of the I/O configuration is stored in a configuration block containing electrically erasable memory circuits, and each configurable interface circuit directly detects and decodes this representation in order to set the status of the configurable interface circuit to an input or output state.

In a second alternative embodiment, each configurable interface circuit includes a dedicated electrically erasable memory circuit, which can be independently set to store the status of the configurable interface circuit to an input or output state.

This invention may be applied to any level of electronics from integrated circuits to board level subsystems to complete electronic systems.

The invention will become better understood by reference to the following detailed description when taken in conjunction with the accompanying drawings showing the preferred embodiments of the invention.

FIGURE 1 is an overall block diagram of the first preferred embodiment of the reconfigurable I/O system.

FIGURE 2 is a schematic logic diagram of an I/O configuration subblock.

FIGURE 3 is a schematic circuit diagram of the program/erase signal control subcircuit and the I/O fuse subcircuit.

FIGURE 4a is a schematic circuit diagram of a generalized configuration decoder.

FIGURE 4b is an example of a truth table for an order four configuration decoder.

FIGURE 5 is a schematic logic diagram of a configurable interface circuit.

FIGURE 6 is a schematic circuit diagram of a configurable I/O driver.

FIGURE 7 is a block diagram of a first alternative embodiment of the reconfigurable I/O system.

FIGURE 8 is a schematic diagram of a second alternative embodiment of a reconfigurable I/O system.

Like reference numbers in the various figures referred to like elements.

FIGURE 1 is a block diagram of the preferred embodiment of the reconfigurable I/O system 10 showing the overall structure of the system. The particular example shown in FIGURE 1 contains an I/O configuration block 11 which stores a user-selectable configuration code. In this example, the code is four bits long; by a simple extension of the invention as described herein, any number of bits may be accommodated. For ease of discussion, the following description will continue to use the example of a 4-bit configuration code. The number of possible configurations for "n" code bits is $2^n$. Any one of these "n" configuration codes may be stored in the I/O configuration block 11 by means of electrically erasable memory circuits.

Inputs to the I/O configuration block 11 are externally supplied signals $I_0$-$I_3$, which indicate the particular configuration code to be stored in the I/O configuration block 1. A high voltage detector - (HVD) circuit 12 is coupled to the power supply voltage source $V_{cc}$ 13. The HVD circuit 12 detects when $V_{cc}$ is raised to a high voltage level. When this event occurs, the HVD circuit 12 sets the signal HVCC to a logic "1", which enables programming of the I/O configuration block 11.

The output of the I/O configuration block 11 consists of a copy of the input configuration code as well as a complemented copy, as indicated by the signal lines $\pm V_0$-$\pm V_3$. These signal lines are coupled to a configuration decoder circuit 14, which comprises a set of NOR decoders coupled to the various combinations of the true or complemented output signals from the I/O configuration block 11. The output of the configuration decoder circuit 14 comprises a set of $2^4$ I/O configuration control signal lines $Z_0$-$Z_{15}$. Only one of these I/O lines is activated for any single configuration code coupled to the configuration decoder 14.

The configuration code stored in the I/O configuration block 11 is a "global" code, with the control of each configurable interface 15 implemented locally within each configurable interface. The outputs of the configuration decoder 14 - (configuration control signals $Z_0$-$Z_{15}$) are coupled to one or more configurable interface circuits 15, each of which is preset to detect the presence of one or more activated configuration control signals. Such detection is accomplished by logically OR'ing all of the I/O configuration control signals that require that particular configurable interface circuit to be in an input or output state, and generating a respective input enable signal or output enable signal, which sets the configurable interface circuit 15 to the proper state. In the input state, a configurable interface circuit 15 can accept an input signal IN and transmit that signal to other circuitry coupled to the configurable interface circuit. When a configurable interface 15 is configured as an output circuit, an output signal from other coupled circuitry is transmitted as an OUT signal. Each configurable interface circuit 15 contains a Schmitt triggered configurable I/O driver.

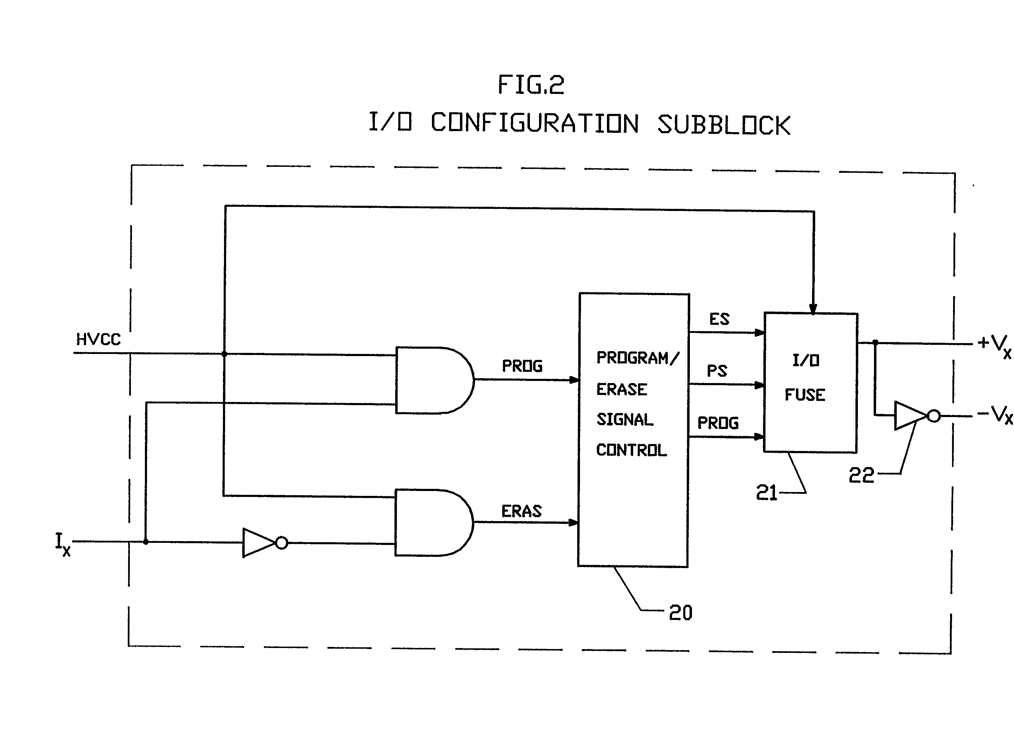

FIGURE 2 is a schematic logic diagram of an I/O configuration subblock. The I/O configuration block 11 of FIGURE 1 comprises one I/O configuration subblock for each input bit of configuration code. If the HVD circuit 12 (shown in FIGURE 1) detects a high voltage level from the $V_{cc}$ power supply, the HVCC logic signal is activated. This signal, when AND'ed with an input configuration code signal (here designated by "$I_x$"), produces a program signal PROG if the configuration code signal is a logical "1", or an erase signal ERAS if the input configuration code signal is a logical "0". The PROG and the ERAS signals are coupled to a program/erase signal control block 20, which translates the activated one of these two signals into an appropriate high voltage program signal PS or erase signal ES.

The three output signals of the program/erase signal control circuit 20 (ES, PS, and PROG) are used to erase or program the I/O fuse circuit 21. Erasing the electrically erasable memory circuit in the I/O fuse circuit 21 causes the output $V_x$ of the I/O configuration subblock to be a logic "0", while programming the I/O fuse circuit 21 causes the output signal $V_x$ to be a logic "1". The complement of the output $V_x$ from each I/O fuse circuit 21 is also provided by means of an associated inverter gate 22. As is well known in the art, electrically erasable memory elements are reprogammable and non-volatile.

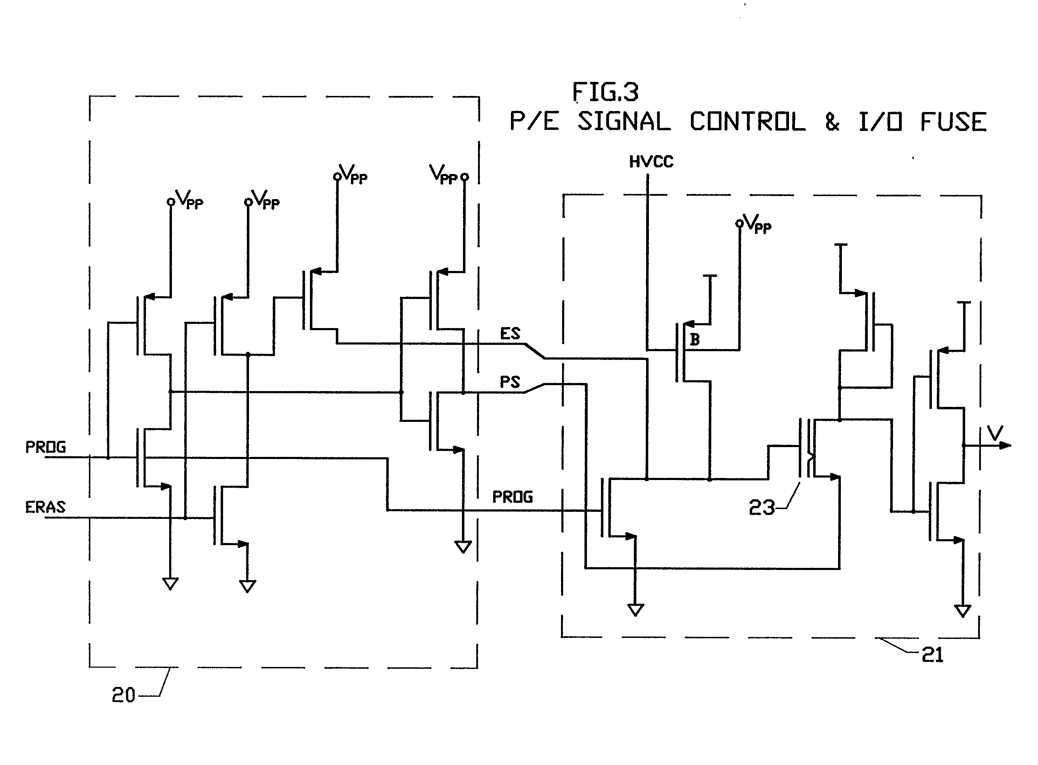

FIGURE 3 shows the detailed circuitry of the program/erase signal control circuit 20 and the I/O fuse circuit 21 of the I/O configuration subblock shown in FIGURE 2. The program/erase signal control circuit 20 and the I/O fuse circuit 21 are composed of both N-channel and P-channel transistor structures. In addition, the I/O fuse circuit 21 includes an electrically erasable memory element 23. In FIGURE 3, if the program signal PROG is a logic level "1", then the output signal PS is set to a high voltage level with a potential equivalent to the $V_{pp}$ voltage supply. Since the program signal PROG and the erase signal ERAS are complementary, the erase signal ERAS will be at a logic level "0".

When the erase signal ERAS is a logical "1" - (which means that the program signal PROG is a logical "0"), the output signal ES is set to a high voltage level, while the output signal PS is set to ground.

The output "V" of the I/O fuse circuit 21 is a logical "1" if the electrically erasable memory element 23 is "programmed" to a logical "1", and is equal to a logical "0" if the electrically erasable memory element 23 is "erased" to a logical "0".

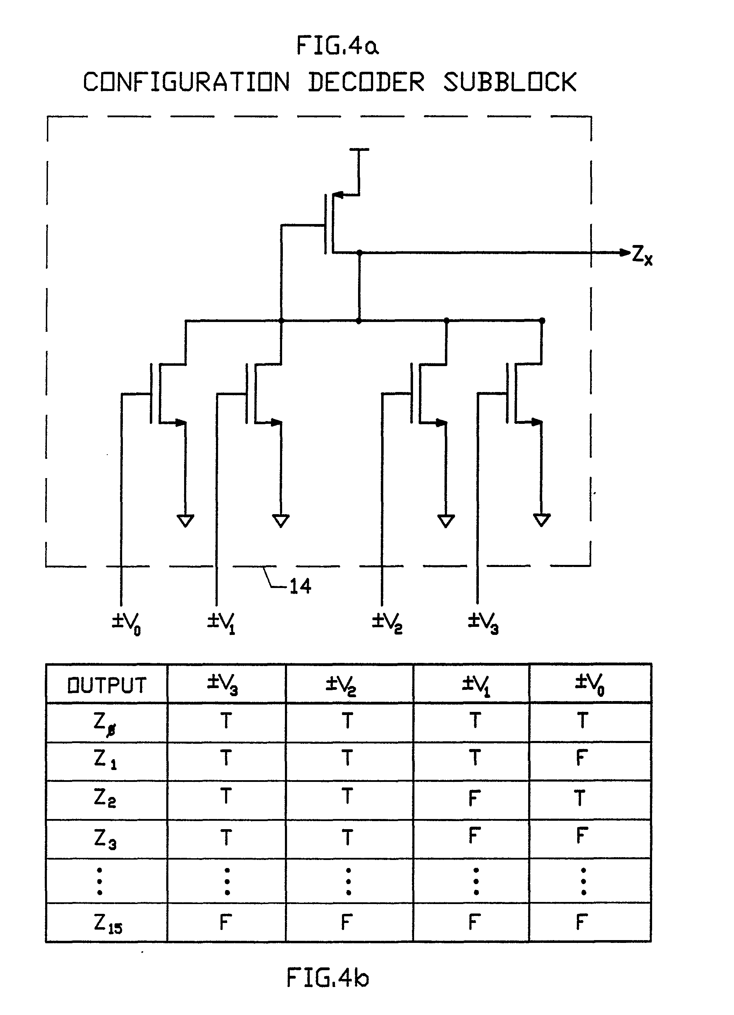

FIGURE 4a is the generalized schematic circuit for the configuration decoder circuit 14 shown in FIGURE 1. The configuration decoder 14 is also composed of N-channel and P-channel transistors. In the particular example shown in FIGURE 4a, a configuration code of four bits is assumed. The circuitry shown in FIGURE 4a can be expanded as desired to accommodate configuration codes of longer length.

The configuration decoder actually comprises multiple sets of NOR decoders similar to the generalized version shown in FIGURE 4a. One such configuration decoder subblock as shown in FIGURE 4a exists for each of the possible outputs. The configuration decoder decodes the configuration code received from the I/O configuration block 11 and activates a single configuration control signal line. These signal lines (which in this example are labeled $Z_0$-$Z_{15}$) represent all of the possible mathematical combinations of the configuration code (in this example, the true and complement versions of $V_0$-$V_3$). Thus, with a configuration code comprising four bits, the configuration decoder will set one of sixteen output lines to a logic "1" in response to any single configuration code. In general, the configuration decoder 14 converts "n" input bits into $2^n$ signal lines, with only one of the $2^n$ signal lines being active for any one n-bit code.

FIGURE 4b shows the truth table for the configuration decoder subblocks. For example, if all of the outputs from the I/O configuration block 11 are equal to a logical "1" (or 'TRUE'), then only the $Z_0$ configuration control line is set to a logic "1". If the output configuration code from the I/O configuration block 11 contained bits all of which were a logic "0" (or "FALSE"), then only output $Z_{15}$ would be set to a logic "1".

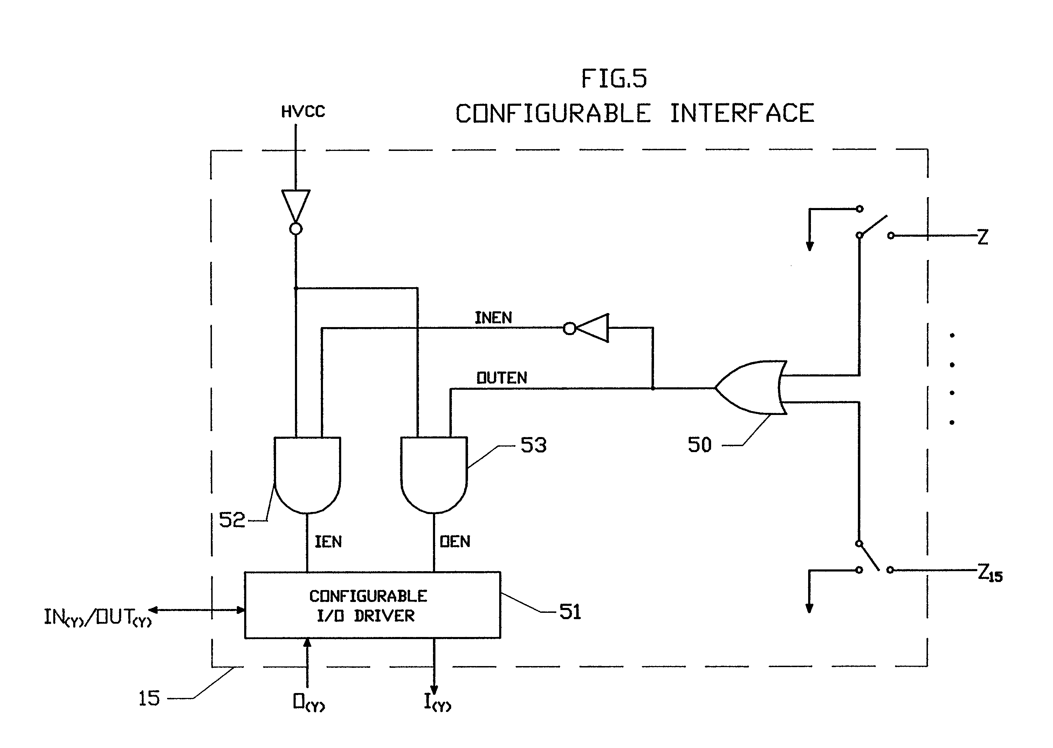

FIGURE 5 shows a schematic diagram of a single configurable interface circuit 15. An OR gate 50 performs the logical OR of all of the single configuration control signals (in this example, $Z_0$-$Z_{15}$) which are to cause the interface to be set into an output state. For example, if a particular configurable interface circuit 15 is intended to be set to an output state whenever configuration code "0000" or "1111" is stored in the I/O configuration block 11, then fourteen of the inputs to OR gate 50 will be switched to ground, while the remaining two inputs will be switch-connected to the $Z_0$ and $Z_{15}$ configuration control signals. The output of the OR gate 50 is an output enable signal OUTEN and its complement, an input enable signal INEN. These I/O enable signals are connected to a configurable

I/O driver 51 through AND gates 52, 53. The gated output enable signal OEN and the gated input enable signal IEN are disabled by the HVCC signal whenever the I/O configuration block 11 is being configured.

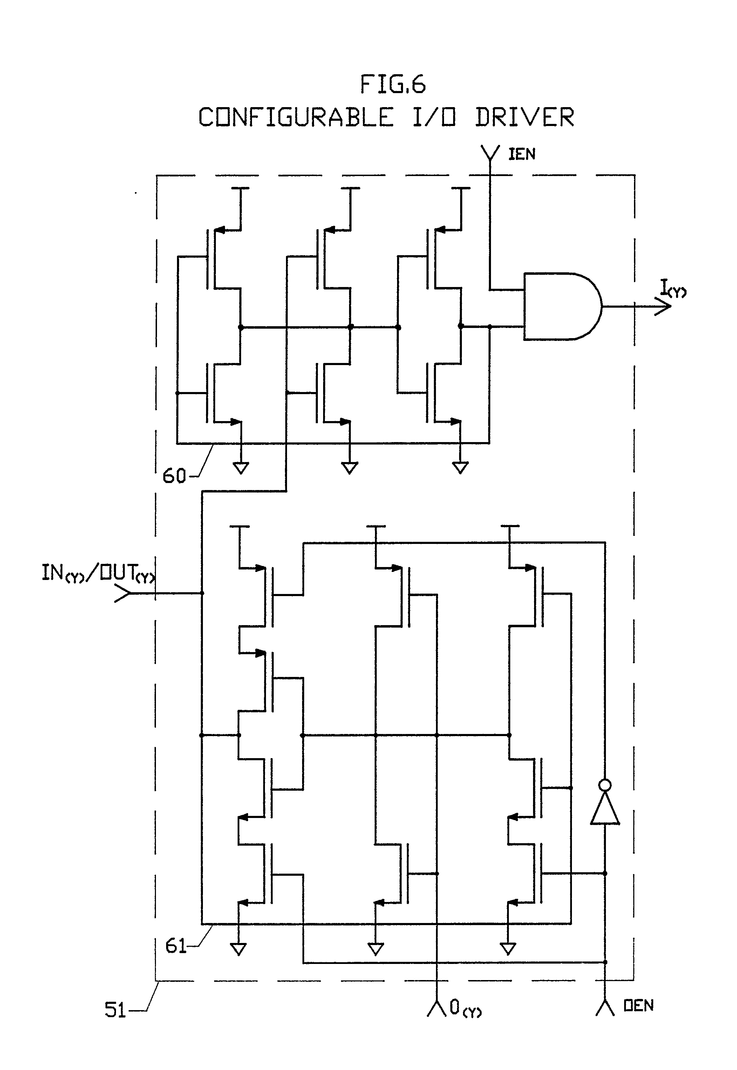

FIGURE 6 shows the detailed schematic circuit diagram of the configurable I/O driver 51 of FIGURE 5. The configurable I/O driver 51 includes a number of N-channel and P-channel transistor structures in the arrangement shown in FIGURE 6, and comprises a Schmitt triggered input buffer 60 which is enabled whenever the input enable signal IEN from AND gate 52 (FIGURE 5) is a logical "1", and a Schmitt triggered tri-state output buffer 61, which is enabled whenever the output enable signal OEN from AND gate 53 (FIGURE 5) is a logical "1". When the input buffer 60 is disabled, the input signal line I(y) is disabled to a logical "0" value. When the output buffer 61 is disabled, the output buffer is set to a high impedance state (or "tri state"), so as to present a high impedance load on the input/output signal line IN(y)/OUT(y).

Typically, multiple configurable interface circuits will be coupled to the configuration control signal outputs from the configuration decoder 14 - (see FIGURE 1). For example, eight configurable interface circuits 15 may be coupled to the outputs of the configuration decoder 14. Each of these configurable interface circuits may be set to an input or output status by different configuration codes. For example, it is possible to set all eight of the configurable interfaces to an input status when the configuration code stored in the I/O configuration block 11 is equal to binary "0000". For a configuration code of binary "0001", it is possible that configurable interface circuits 1-4 are set to an input status while interface circuits 5-8 are set to an output status. As a further example, if the configuration code stored in the I/O configuration block 11 is binary "0010", then all eight of the configurable interface circuits may all be set to an output status. Thus, the present invention gives an electronic systems designer tremendous flexibility in designing circuitry that is functionally compatible with other circuitry, but differs in the configuration of its input/output signal leads. This is particularly true when the present invention is applied to the input/output configuration of integrated circuits.

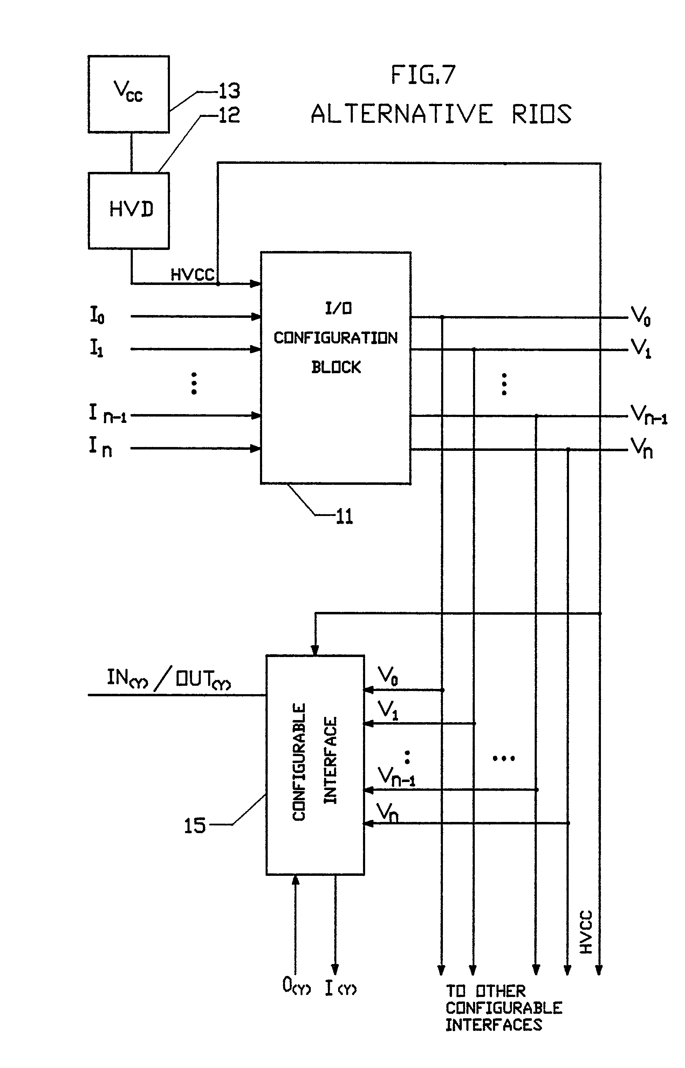

FIGURE 7 discloses an alternative structure for the reconfigurable I/O system. In this structure, the input signals to the I/O configuration block 11 are directly comparable to the "$Z_x$" outputs of the configuration decoder 14 in FIGURE 1. That is, one and only one of the input signals $I_0$-$I_n$ in FIGURE 7 can be set to a logical "1", which is stored in the I/O configuration block 11 in the same manner as discussed with respect to FIGURE 1. However, the I/O configuration block 11 must contain more I/O configuration subblocks (of the same type as shown in FIGURE 2) than in the case shown in FIGURE 1, in which only the configuration code is stored. The output from each I/O configuration subblock consists only of the value stored in each respective I/O fuse circuit; the complement of this value need not be generated since it is not used further in the system. Thus, the number of outputs from $V_o$-$V_n$ from the I/O configuration block 11 is equal to the number of original inputs $I_o$-$I_n$. As shown in FIGURE 7, the outputs $V_o$-$V_n$ are coupled to each configurable interface circuit 15 in the system. The structure and operation of each configurable interface circuit is the same as described above for FIGURE 5.

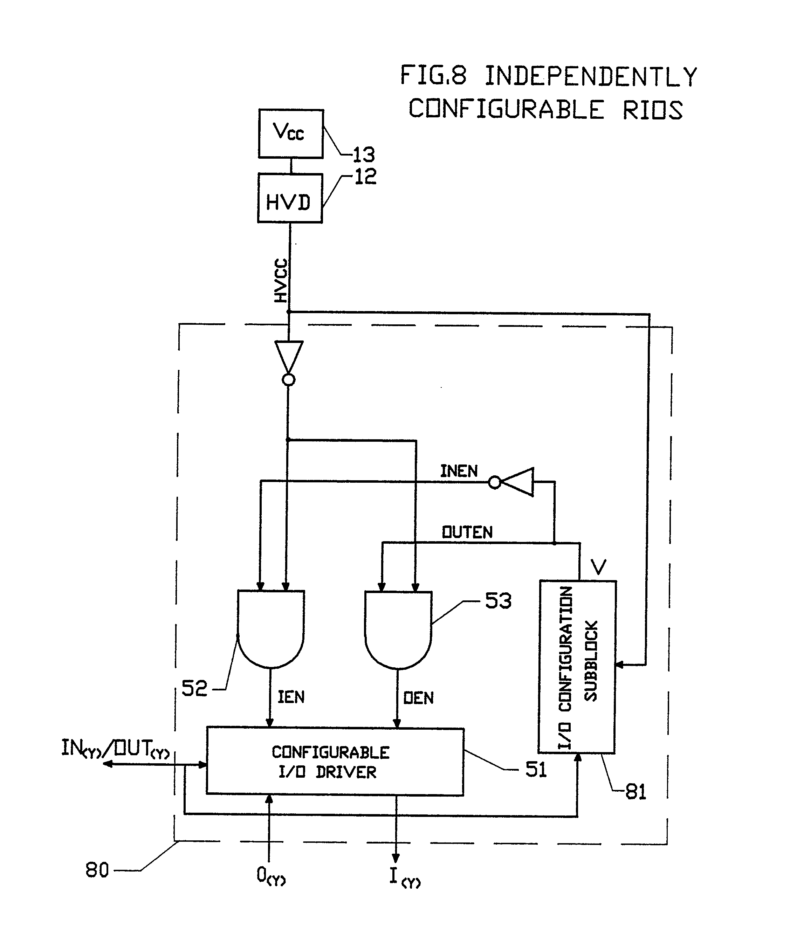

FIGURE 8 shows a second alternative reconfigurable I/O system. In this system, each individual configurable interface circuit 80 is configured to an input state or an output state independent of all other configurable interfaces. In this structure, the input/output signal lead IN(y)/OUT(y) is used to carry the programming information to each configurable interface 80. Each such configurable interface 80 contains its own I/O configuration subblock, which is essentially identical to the circuit shown in FIGURE 2. When the voltage source $V_{cc}$ 13 is raised to a high voltage level, the high voltage detector circuit 12 sets the HVCC logic signal to "1". This enables the setting of the I/O configuration subblock 81, and disables the input enable signal IEN and output enable signal OEN. The I/O configuration subblock 81 is programmed or erased when HVCC is a logic "1" and IN(y)/OUT(y) is a logic "1" or logic "0", respectively. When the HVCC signal is reset to a logic "0", the output "V" of the I/O configuration subblock 81 is a logic "1" or "0" if the subblock was programmed or erased, respectively. The value of "V" sets the status of the configurable I/O driver to the appropriate input or output state.

While this invention has been described with reference to several preferred embodiments, it is not intended that this description be construed in a limiting sense. Various modifications of the preferred embodiments, as well as other embodiments of the invention, will be apparent to a person skilled in the art upon reference to this description. It is therefore contemplated that the appended claims will cover any modifications or embodiments as fall within the true scope of the invention.

**Claims**

1. An electronic reconfigurable input/output - (I/O) system comprising:

(a) a reprogrammable I/O configuration circuit for receiving and storing an I/O configuration code;

(b) a configuration decoder circuit, coupled to the output of the I/O configuration circuit, for decoding the output I/O configuration code and for activating one of a plurality of output configuration control signals based on the value of the I/O configuration code; and

(c) at least one configurable interface circuit, coupled to the configuration control signals, and having means for detecting a selectable number of activated configuration control signals and means for being set to receive external input signals or to transmit external output signals in response thereto.

2. The reconfigurable I/O system of claim 1, wherein the I/O configuration circuit includes means for storing each bit of the I/O configuration code in an electrically erasable memory circuit.

3. The reconfigurable I/O system of claim 1, wherein the configuration decoder circuit decodes "n" bits of I/O configuration code and activates one of $2^n$ configuration control signals in response thereto.

4. The reconfigurable I/O system of claim 1, wherein each configurable interface circuit comprises:

(a) a configuration control signal recoder circuit switch-selectably coupled to the configuration control signals, for detecting at least one activated configuration control signal and for generating an input enable signal and an output enable signal in response thereto; and

(b) a configurable I/O driver circuit for setting the state of the configurable interface circuit to an input state upon receipt of an input enable signal, and to an output state upon receipt of an output enable signal.

5. The reconfigurable I/O system of claim 4, wherein the reconfigurable I/O driver comprises a Schmitt-trigger input buffer circuit activated by the input enable signal, and a tristate, Schmitt-triggered output buffer circuit activated by the output enable signal.

6. An electronic reconfigurable input/output - (I/O) system comprising:

(a) a reprogrammable I/O configuration circuit for receiving and storing an I/O configuration state having only a single activated bit, and outputing the I/O configuration state as I/O configuration control signals;

(b) at least one configurable interface circuit, coupled to the ouput I/O configuration control signals, and having means for detecting a selectable number of activated I/O configuration control signals and means for being set to receive external input signals or to transmit external output signals in response thereto.

7. The reconfigurable I/O system of claim 6, wherein the I/O configuration circuit includes means for storing each bit of the I/O configuration state in an electrically erasable memory circuit.

8. The reconfigurable I/O system of claim 6, wherein each configurable interface circuit comprises:

(a) a configuration control signal recoder circuit switch-selectably coupled to the I/O configuration control signals, for detecting at least one activated configuration control signal and for generating an input enable signal and an output enable signal in response thereto; and

(b) a configurable I/O driver circuit for setting the state of the configurable interface circuit to an input state upon receipt of an input enable signal, and to an output state upon receipt of an output enable signal.

9. The reconfigurable I/O system of claim 8, wherein the reconfigurable I/O driver comprises a Schmitt-trigger input buffer circuit activated by the input enable signal, and a tristate, Schmitt-triggered output buffer circuit activated by the output enable signal.

10. An electronic reconfigurable input/output - (I/O) system comprising at least one reprogrammable configurable interface circuit for receiving and storing an I/O configuration bit, and having means for being set to receive external input signals or to transmit external output signals in response thereto.

11. The reconfigurable I/O system of claim 10, wherein the configurable interface circuit includes means for storing the I/O configuration bit in an electrically erasable memory circuit.

12. The reconfigurable I/O system of claim 10, wherein each configurable interface circuit includes a configurable I/O driver circuit for setting the state of the configurable interface circuit to an input state if the I/O configuration bit is in a first state, and to an output state if the I/O configuration bit is in a second state.

13. The reconfigurable I/O system of claim 12, wherein the reconfigurable I/O driver comprises a Schmitt-trigger input buffer circuit activated when the I/O configuration bit is in a first state, and a tristate, Schmitt-triggered output buffer circuit activated when the I/O configuration bit is in a second state.

FIG.1 RIOS

FIG.2
I/O CONFIGURATION SUBBLOCK

FIG.3
P/E SIGNAL CONTROL & I/O FUSE

# FIG.4a
## CONFIGURATION DECODER SUBBLOCK

$Z_x$

$\pm V_0$     $\pm V_1$     $\pm V_2$     $\pm V_3$

—14

| OUTPUT | $\pm V_3$ | $\pm V_2$ | $\pm V_1$ | $\pm V_0$ |
|--------|-----------|-----------|-----------|-----------|
| $Z_0$ | T | T | T | T |
| $Z_1$ | T | T | T | F |
| $Z_2$ | T | T | F | T |
| $Z_3$ | T | T | F | F |
| ⋮ | ⋮ | ⋮ | ⋮ | ⋮ |
| $Z_{15}$ | F | F | F | F |

## FIG.4b

# FIG.5
## CONFIGURABLE INTERFACE

# FIG.6
## CONFIGURABLE I/O DRIVER

# FIG.7
## ALTERNATIVE RIOS

FIG.8 INDEPENDENTLY
CONFIGURABLE RIOS

$V_{CC}$ ——13

HVD ——12

HVCC

INEN

OUTEN

I/O CONFIGURATION SUBBLOCK

52

53

IEN

OEN

IN$_{(Y)}$/OUT$_{(Y)}$

CONFIGURABLE I/O DRIVER

51

81

80

O$_{(Y)}$

I$_{(Y)}$